# EUROPEAN PATENT APPLICATION

(11) **EP 4 648 030 A1**
(43) Date of publication of application: **12.11.2025**
(21) Application number: 24174566.0
(22) Date of filing: 07.05.2024
(51) Int. Cl.: G07C 9/10, G06V 20/40, G07C 9/20, G07C 9/28, G06F 21/30, G07B 15/04

(54) **ACCESS CONTROL DEVICE AND A METHOD FOR VALIDATING ACCESS TO A RESTRICTED AREA**

(71) Applicant: Skidata GmbH, 5083 Grödig/Salzburg (AT)
(72) Inventor: SURKAU, Reinhard, 5083 Salzburg (AT); HEISS, Andreas, 5083 Salzburg (AT); TOLANOV-VOGL, Danijela, 5083 Salzburg (AT)
(74) Representative: Mewburn Ellis LLP

(57) **Abstract**

The invention refers to an access control device (10) for validating access to a restricted area, comprising an authorization carrier reader (22) configured to read an authorization carrier if the authorization carrier is located in an authorization carrier reading zone, an imaging unit (24) configured to record a video image of a person (12) in front of the access device, an output unit (26) configured to output a notification to the person (12) in front of the access device, and a controller (20) configured to analyse the video image recorded by the imaging unit (24) for identifying and localizing the authorization carrier held by the person (12), determine whether the identified authorization carrier is within the authorization carrier reading zone, generate, if the authorization carrier is determined not to be within the authorization carrier reading zone, a first notification to be output by the output unit (26), the first notification providing guidance to the person (12) to move the authorization carrier to the authorization carrier reading zone, and validate the authorization carrier after the authorization carrier being read by the authorization carrier reader (22).

## Description

The present invention relates to an access control device for validating access to a restricted area. The access control device includes an authorization carrier reader configured to read an authorization carrier. Furthermore, the invention relates to a method for validating access to a restricted area.

Access control devices for persons are known from the prior art. They can comprise means for the detection and evaluation of access authorizations as well as mechanical blocking elements, for example in the form of turnstiles, turnstiles with one, two or three blocking arms, sliding doors, lifting-sliding doors, or so-called flap gates, whereby the blocking elements are actuated in the presence of a valid access authorization. Furthermore, access control devices for vehicles are known which have blocking elements which are actuated in the presence of a valid access authorization.

The throughput rate at access control devices can drop considerably if users do not understand how to present their authentication carrier to the reader.

The fact that authentication carriers of different types and technologies can be used at the same access control poses a major challenge for the intuitive design of the user experience. Despite great efforts to make access control devices as intuitive and self-explanatory as possible in line with the technical and design possibilities, too often situations arise in which users need help from a human instructor and therefore significantly reducing the throughput rate. The wide range of possible authentication carriers includes Barcode tickets in ISO card format, print-at-home (A4), on tablet computers or smartphones, RFID tickets in ISO card format, NFC tickets in smartphone wallet apps with NFC antennas built into these smartphones at different locations within the housing and face recognition.

The present invention is based on the objective of simplifying the validation of an authorization carrier with an access control device.

This objective is solved by the subject matter of the independent claims. Optional embodiments are described in the dependent claims.

An access control device for validating access to a restricted area is provided. The access control device comprises an authorization carrier reader, an imaging unit, an output unit, and a controller. The authorization carrier reader is configured to read an authorization carrier if the authorization carrier is located in an authorization carrier reading zone. The imaging unit is configured to record a video image of a person in front of the access device. The output unit is configured to output a notification to the person in front of the access device. The controller is configured to (i) analyse the video image recorded by the imaging unit for identifying and localizing the authorization carrier held by the person, (ii) determine whether the identified authorization carrier is within the authorization carrier reading zone, (iii) generate, if the authorization carrier is determined not to be within the authorization carrier reading zone, a first notification to be output by the output unit, the first notification providing guidance to the person to move the authorization carrier to the authorization carrier zone, and (iv) validate the authorization carrier after the authorization carrier being read by the authorization carrier reader.

Further, a method for validating access to a restricted area is provided. The method comprises the steps of (i) recording a video image of a person in front of the access device, (ii) analysing the recorded video image for identifying and localizing an authorization carrier held by the person, (iii) determining whether the identified authorization carrier is within the authorization carrier reading zone of an authorization carrier reader, (iv) generating, if the authorization carrier is determined not to be within the authorization carrier reading zone, a first notification to be output by an output unit, the first notification providing guidance to the person to move the authorization carrier to the authorization carrier zone, and (v) validating the authorization carrier after the authorization carrier being read by the authorization carrier reader.

According to the invention, the interaction between the person and the access control device can be streamlined because the first notification to be issued to the person can help the person to move the authorization carrier to the authorization carrier reader in case the person does not recognise the position or location of the authorization carrier reader. Thus, the average time a person spends in front of the access control device for validating the authorization carrier can be reduced. This may increase the rate of persons that can pass the access control device in a unit time (e.g. the number of persons that can pass through the access control device within an hour).

The access control device may mimic, support, and/or replace a human instructor or staff that helps persons with the interaction with the access control device for accessing the restricted area (i.e. passing the access control device).

The access control device may be provided for validating access to a restricted area, for example a sports venue, an event venue, a ski resort, a parking space, and/or a public transport system. The access control device may be placed at one or more checkpoints which persons need to pass for entering the restricted area. The access control device may be placed at a boarder and/or separation line between the restricted area and outside of the restricted area. For example, the access control device may be placed at an entrance door or gate of the restricted area.

The person may walk towards the access control device and walk through the access control device. In this case, the access control device may control the access of individual persons to the restricted area. However, the access control device may be used for controlling the access of vehicles to the restricted area (e.g. a parking space). In this case, the person may be within or sit in the vehicle and driving through the access control device.

The access control device may include a housing in which and/or on which the various components of the access control device are located. The housing of the access control device may include a physical barrier against unallowed access to the restricted area. For example, the housing of the access control device may limit an access area which the person needs to pass when entering the restricted area.

The authorization carrier may include one or more types, such as a ticket, a means for identifying a person, and/or a means for electronically paying for the access to the restricted area.

The ticket may be any form of receipt that access to the restricted area has been paid and/or access to the restricted area will be granted when passing through the access control device. In other words, the ticket may include information and/or data that notify the access control device that access to the restricted area should be granted upon presentation of the ticket. The ticket may be generated after payment and/or may be generated without payment, for example for allowing certain persons access to restricted area.

The ticket may include a physical ticket which may have a barcode, a QR code, and/or other printed signs that can be read out by an optical authorization carrier reader. The physical ticket may be printed at home and/or printed by a ticket vending machine or ticket outlets.

The ticket may be an electronic ticket, e.g. a set of data that is stored on a data carrier. The electronic ticket may be stored on a mobile phone or any other type of terminal user device. The electronic ticket may also be stored on a data carrier such as RFID enabled device, for example for accessing a building or certain restricted parts of the building, an attraction area, a sports area and/or transport media like a ski lift.

The means for identifying a person may be an identity card or any other means that allows identification of the person (e.g. a personalized token). In this case, the access control device may check whether the person has authorization to access the restricted area, for example whether the person as identified by the means for identifying the person is on a list that has access to the restricted area. To this end, the access control device (for example the controller and/or servers connected to the access control device) stores a list of persons which are eligible to access the restricted area.

The means for paying the access to the restricted area may include a credit card, a debit card, and/or other means for electronical payment. In this case, the access to restricted area can be allowed after payment. Thus, the access control device may include means for processing electronic payment. Further, the means for paying may be used for logging the access of the person to the restricted area. The payment may be executed after the person leaves the restricted area or after a certain period of time after the person has accessed the restricted area.

The authorization carrier reader may include several embodiments each of which is configured to read a corresponding type of authorization carrier. For example, the authorization carrier reader may include an optical scanner for detecting visible information (e.g. a barcode or QR code) that is physically printed on the ticket and/or can be displayed on the mobile device. Further, the authorization carrier reader may include an antenna and/or a transceiver for allowing nearfield electromagnetic communication with the authorization carrier (e.g. radio-frequency identification (RFID) or near-field communication (NFC)). The authorization carrier reader may also include a reader for reading credit cards or debit cards.

The authorization carrier may include one or more types of the authorization carrier, for example a barcode or QR code that is printed on an RFID card. Further, the authorization carrier reader may include one or more embodiments for reading the respective type of authorization carrier.

The authorization carrier reader may include a scanner for scanning the ticket, an input device for inputting an access request (such as a touchscreen, buttons, a keyboard), a payment device for accepting cash and/or card payment, and/or an antenna for detecting a token granting access. The authorization carrier reader may include reading devices for contactless reading of access authorizations, for example via a standard for wireless communication, such as RFID, NFC, Wi-Fi, Bluetooth, BLE, and/or UWB.

The authorization carrier reader may be mounted on or in the access control device (e.g. in or on a housing thereof). More generally, the authorization carrier reader is mounted such that the person can present the authorization carrier in such a way to the authorization carrier reader that it can be read by the authorization carrier reader when passing the access control device. The authorization carrier reader may be in data communication with the controller.

The imaging unit may include one or more cameras which may be positioned for imaging an area around the authorization carrier reader, an area in front of the authorization carrier reader, an area in front of the access control device, and/or the access area. The imaging unit may be configured to capture a video (a stream of images) and/or single images, for example periodically. The imaging unit may be attached to the access control device (e.g. to a housing thereof). The imaging unit may also be positioned offset of the access control device, for example behind the access control device (when viewed in an entrance direction) or above the access control device (for example mounted to ceiling). It is also possible that one or more cameras of the image unit are mounted to the access control device and one or more cameras of the imaging unit are positioned offset of the access control device. The imaging unit may be in data communication with the controller.

The output unit may include means for outputting a visual and/or audio notification. For example, the output unit may include a display and/or a speaker which are described in the following. The output unit may be arranged in an/or on the access control device (e.g. to a housing thereof). More generally, the output unit is positioned at such a location that the person standing in front of the access control device can receive and/or perceive the notification output by the output unit. The output unit may be in data communication with the controller.

The controller may comprise one or more processors, one or more memories, and/or other types of computing means which allow the processing of the recorded video image and the generation of the first notification. The controller may be arranged within the housing of the access control device. The controller may be a computer or server remote from the housing of the access control device. The controller may store an algorithm, table and/or programs that are configured to execute the various functionalities (described below in more detail) that the controller is configured to execute.

The controller may be configured to execute one or more steps of the methods described herein. The video image may be stored in a buffer and may only be stored for the time of processing the video image. The analysis of the video image may be in real time. This means that there is little or no time gap between the storing of the video image (in the buffer) and the analysis thereof. For example, the analysis of the video image last less than 0.1 seconds, 1 seconds, or 5 seconds.

This disclosure may also refer to the controller and/or a computer-readable code stored on an information carrying medium that, when executed by a computer, carries out the method as described herein.

The controller may analyse the recorded video image for identifying and authorization carrier within the video image. To this end, the controller may include an image processing software, a neural network, and/or an artificial intelligence that enables the controller to identify the authorization carrier. The controller may be configured to identify one or more of the types of authorization carriers described above. For example, the controller may be configured to identify those types of authorization carriers that can be read out by the authorization carrier reader. For example, the controller may be configured to identify a printed ticket (e.g. by identifying a barcode and/or a QR code) and/or a mobile phone.

After identifying the authorization carrier within the recorded video image, the controller may be configured to localize the authorization carrier which may include determining the current position of the authorization carrier. This may include determining the absolute position of the authorization carrier or a relative position of the authorization carrier relative to the authorization carrier reader. The relative position may include a distance, an angle, and/or an orientation of the authorization carrier relative to the authorization carrier reader.

Localizing the authorization carrier held by the person may alternatively include determining whether or not the authorization carrier is arranged within the authorization carrier reading zone or not. Alternatively, localizing the authorization carrier held by the person may include determining an approximate position and/or determining a volume or area in which the authorization carrier is held. This volume or area may have a predetermined size and/or can indicate the approximate position. For example, the controller may divide the volume in front of the access control device in a plurality of three-dimensional cells. Localizing the authorization carrier held by the person may include determining in which one of the cells the authorization carrier is located.

The authorization carrier reading zone can correspond to the operating range of the authorization carrier reader. The authorization carrier reading zone may correspond to an area or volume in which the authorization carrier can be read by the authorization carrier reader. This means that outside the authorization carrier reading zone, the authorization carrier reader is unable to read the authorization carrier. In case of a near-field communication, the authorization carrier reading zone may correspond to a maximum distance from the authorization carrier reader. In case of an optical scanner, the authorization carrier reading zone may correspond to a reading range of the scanner which may be determined by the optical components of the optical scanner.

The position and/or extension of the authorization carrier reading zone may be stored with the controller. After the position, the approximate position, and/or a volume/area of the approximate position of the authorization carrier is determined, the controller assesses whether the determined position, the approximate position, and/or a volume/area of the approximate position are within the authorization carrier reading zone. If not, the controller generates the first notification that is forwarded to the output unit so that the output unit can issue the first notification to the person.

The first notification includes some guidance which helps the person to move the authorization carrier towards or to the authorization carrier reading zone. For example, the first notification may include information where the authorization carrier reader is located on the access control device. The first notification may also include pointers for the person where to move the authorization carrier such that it can be read by the authorization carrier reader.

The first notification may include a prestored message and/or indication where the authorization carrier reader is located. The first notification may include one or more lights and/or illuminated arrows which visually indicates the person to the position/location where the authorization carrier reader is located. In this case, the output unit includes the one or more lights and/or the one or more illuminated arrows which are illuminated upon generation of the first notification by the controller.

As the first notification is only issued when it has been determined that the authorization carrier is not within the authorization carrier reading zone, the first notification is only issued when it is perceived that the person does not know where to present the authorization carrier so that it can be read out by the authorization carrier reader. This reduces the number of interactions of the access control device with the person which can provide for a more streamlined access to the restricted area because any notification issued by the access control device may prompt the person to pause their intended behaviour (e.g. presenting the authorization carrier to the authorization carrier reader). Thus, only issuing the first notification when there is an actual need (the authorization carrier is not within the authorization carrier reading zone) avoids unnecessary interactions between the access control device and the person. Further, such unnecessary interaction may be perceived as an annoyance to the person.

The controller validates the ticket after it has been read out by the authorization carrier reader, e.g. after the person presented the authorization carrier to the authorization carrier reader after the prompt or guidance included in the first notification. The validation of the authorization carrier may include checking whether the authorization carrier is valid, which may include checking the expiry date of the access request, whether the authorization carrier provides valid access to the restricted area controlled by this access control device, and/or whether the person as identified by the authorization carrier is on a list of persons allowed to access the restricted area.

The validation of the authorization carrier may further include an update of the status of the authorization carrier/ticket (e.g. valid to no longer valid), logging the time and/or date of the access of the person to the restricted area, and/or a successful payment of a ticket to the restricted area.

The validation of the authorization carrier may be based on information and/or data which is stored on the authorization carrier and which is read out by the authorization carrier reader and processed by the controller. The validation of the authorization carrier may also be based on remote information which is optionally linked to the authorization carrier by a link stored on the authorization carrier. Such a link could be an identification number, a link towards a storage place with further information as e.g. a (Jason-) file containing more information (e.g. a reference picture), and/or a web-page address linking to a web-page with more information to read out for authorization purposes.

In an optional embodiment, the controller is further configured to determine a current position of the authorization carrier. Optionally, the first notification provides guidance to the person to move the authorization carrier from the current position to the authorization carrier zone.

The determination of the current position of the authorization carrier may be executed as described above. The first notification may include some bespoke information for the person to move the authorization carrier from its current position to the authorization carrier reading zone. This means, the first notification may not be a prestored message and rather includes information that is newly generated based on the current position of the authorization carrier. For example, after determining the current position of the authorization carrier with respect to the authorization carrier reader, the first notification may include information in which direction and/or how far the authorization carrier needs to be moved for reaching the authorization carrier reading zone. For example, the first notification may include instructions to the user to move the authorization carrier up, down, right and/or left and/or how far the authorization carrier needs to be moved (e.g. 10 cm, 20 cm, or 30 cm), for example in each direction.

In this way, the person receives bespoke information how to move the authorization carrier to place it with the authorization carrier reading zone. This may simplify and, therefore, accelerate the read-out of the authorization carrier because the person receives bespoke instructions where to move the authorization carrier.

In an optional embodiment, the access control device further comprises an access blocking device. Optionally, the controller is configured to send an opening signal to the access blocking device after the authorization carrier being read by the authorization carrier reader, optionally after the authorization carrier has been validated.

In this way, the access control device may not only validate access to the restricted area but also controls the access to the restricted area, e.g. using the access blocking device.

The access blocking device can include one or more mechanical blocking elements. The blocking elements of access blocking devices for persons may include turnstiles, turnstiles with one, two or three blocking arms, sliding doors, lifting-sliding doors, or so-called flap gates, whereby the blocking elements can be actuated in the presence of a valid access authorization. Furthermore, access control devices for vehicles are known which have blocking elements such as (rotatable) barriers.

The blocking elements of the access blocking device can be configured to be moved between an open position and a closed position. In the closed position, the access blocking device (e.g. the one or more blocking element) may block a part or the complete access area defined by the access control device. In the open position, the access blocking device (e.g. the one or more blocking element) may unblock a part or the complete access area for granting access through the access area.

The access blocking device (e.g. the one or more blocking element) can be movable (not locked) in the open position such that the person and/or vehicle can push/move the access blocking device (e.g. the one or more blocking element) in order to get access. In the closed position, the access blocking device (e.g. the one or more blocking element) is not movable (i.e. locked). In this embodiment, the access blocking device can comprise turnstiles. In other words, the open position does not only refer to an embodiment in which the access blocking device (e.g. the one or more blocking element) is not positioned in the access area. Rather, the open position defines a state of the access blocking device in which the access blocking device grants access, i.e. a person and/or vehicle can pass the access control device.

The access control device may comprise a supporting device for supporting the one or more blocking elements. The housing may at least partially surround the supporting device. Further, the supporting device may form a part of the housing. The one or more blocking elements may be movable relative to the housing. The supporting device can support, allow movement of, and/or move the one or more blocking elements from the open position to the closed position.

The supporting device may include an actuator, such as an electric motor, for moving the one or more blocking elements. Alternatively or additionally, the supporting device may comprise locking means for locking and unlocking the access blocking device. In an unlocked state or open position, the one or more blocking elements can be moved (e.g. from the closed position to the open position) by the person and/or the vehicle. In a locked state, the one or more blocking elements cannot be moved (e.g. from the closed position to the open position) by the person and/or the vehicle. The locking means mechanically controls access to the first access, the second access, and/or the common access is denied.

The access blocking device (e.g. supporting device) may put the access blocking device in the open state upon receiving opening signal so that the person can pass the access control device.

The controller may be configured to assess whether the authorization carrier authorizes access to the restricted area. For example, this may include checking whether the ticket is valid and/or whether payment has been made. After reading the authorization carrier and determining that the person is allowed to access the restricted area, the controller generates the open signal which may be sent to the access blocking device (e.g. to the actuator for moving the access blocking device).

The controller may be further configured to check whether the person has passed the access control device, for example by checking whether the person has opened the gate and/or by sensors which can detect a passing person (e.g. a light barrier). The ticket may only be validated after the person has passed the access control device. However, it is also possible that the ticket may be validated after the opening signal has been generated (i.e. without checking whether the person has passed the access control device).

The validation of the ticket may include that the ticket may be made or marked no longer valid. Alternatively, the validation of the ticket may include a change in a status of the ticket, for example a reduction of a credit and/or point stored on or associated with the ticket. The credit and/or points may be provided as a type of entrance fee for accessing the restricted area.

In alternative embodiments, the access blocking device is intended to open or be in the open position only if a valid authorization is present. Thus, a ticket validation (e.g. as described above) can occur before the open signal is generated.

The access blocking device may permanently be in an open position (e.g. the gates are open) unless a closing signal is generated. The closing signal may be generated if a ticket is found invalid and/or no payment is made. Thus, the access blocking device may remain in the open position upon receiving the opening signal. In this case, the opening signal may correspond to a signal or processing result that the person is granted access to the restricted area.

In an optional embodiment, the controller is configured to identify the person in front of the authorization carrier reader and measure the time period during which the person is in front of the authorization carrier reader, for example unsuccessfully attempting to read their authentication carrier. Optionally, the controller is configured to generate the first notification if the measured time period is longer than a predetermined time period.

The identification of the person may include detecting the presence of the person in front of the authorization carrier reader and/or in front of the access control device. In other words, the controller may be configured to identify that there is a person in front of the authorization carrier reader. This may include distinguishing a human being from objects and/or animals. For example, the controller may include a neural network and/or artificial intelligence which is configured to identify persons in the recorded video image. Commonly known techniques may be used for identifying a person in a video image.

Alternatively or additionally, the controller may be configured to identify the vehicle in front of the access control device for identifying that there is a person in front of the authorization carrier reader.

The controller may be configured to determine that the person is in front of the authorization carrier reader by determining whether the person is within the access area and/or a predetermined area in front of the authorization carrier reader and/or the access control device. This may include determining a current position of the person and checking whether the current position is within the predetermined area. Alternatively or additionally, the controller may be configured to determine the distance between the authorization carrier reader and the person and checks whether this distance is below a predetermined threshold. If so, the controller concludes that a person is in front of the authorization carrier reader.

The time period during which the person is determined to be in front of the authorization carrier reader may be started when the controller determines that the person is in front of the authorization carrier reader, for example when the controller determines that the position of the person is within the access area, the predetermined area, and/or the distance between a person and the authorization carrier reader is below the predetermined threshold.

The controller may include a clock which is started once the controller determines that the person is in front of the patient carrier reader. Once the clock reaches the predetermined time period (e.g. 5 seconds, 10 seconds, or 20 seconds), the controller generates the first notification to be issued by the output unit. On the other hand, if the authorization carrier reader reads out the authorization carrier before the end of the predetermined time period, no first notification may be issued.

The first notification may also not be issued in some instances when access to the restricted area is temporally stopped. This may occur with lifts having only a specific number (e.g. two) but large gondolas. There, the blocking device can be temporally blocked or in the closed position if a number of person to enter it has surpassed the capacity of the gondolas. In such cases, the issue of the first notification may be stopped since the person is not let in until a waiting area in front of the gondolas is cleared.

The predetermined time period may be set to correspond to a time period a person needs on average for presenting the authorization carrier with the authorization carrier reader. A buffer period may be added to this average time period. The average time period may be determined in advance, for example by recording the time period a plurality of people need for presenting the authorization carrier to the authorization carrier reader.

In this way, the first notification is only issued if it is expected that the person does not find the authorization carrier reader. In other words, the controller waits for a reasonable or expected period of time when detecting that the person is in front of the authorization carrier reader before issuing the first notification. It is assumed that the person only requires some guidance for presenting the authorization carrier to the authorization carrier reader if the person has not presented the authorization carrier within the authorization carrier reading zone within the predetermined period of time. Thus, this optional feature allows to issue the first notification only when it is actually helpful for the person.

In an optional embodiment, if the controller is unable to identify and/or localize the authorization carrier held by the person, the controller is further configured to generate a second notification to be output by the output unit. Optionally, the second notification notifies the person to show the authorization carrier.

The controller may be unable to identify and/or localize the authorization carrier because the person does not present/show the authorization carrier. Alternatively, the person does present/show the authorization carrier but the controller cannot identify the authorization carrier because it may be out of sight of the imaging unit, hidden by an object and/or the person, and/or the algorithm and/or program stored on the controller is unable to identify the authorization carrier in the recorded video image.

In this case, the second notification is issued by the controller to be output by the output unit. The second notification may have the same optional features and/or characteristics as the first notification. The second notification is intended to prompt the person to show or present the authorization carrier, for example such that it can be imaged by the imaging unit. For example, the second notification notifies the user to hold the authorization carrier at a particular position or in such a way that it can be imaged by the imaging unit.

The second notification is intended as a prompt to the person to present or show the authorization carrier. This may be helpful in case the person does not know that the authorization carrier needs to be read out by the authorization reader and/or the authorization carrier is at such a position that is not detectable or cannot be imaged so that the access control device cannot issue the first notification for guiding the person to move the authorization carrier towards the authorization carrier reading zone. In other words, the second notification may be used to start the guidance process using the first notification. For example, the first notification may be immediately issued after the authentication carrier has been identified and localized in the recorded video stream which may become possible because the user presented the authentication carrier in response to the second notification.

The second notification may be generated every time the controller is able to identify the person in the video stream but not the authorization carrier. Alternatively, the second notification may be generated only after the predetermined time period for generating the first notification has elapsed. Further, the predetermined time period for generating the second notification may be longer or shorter than the predetermined time period for generating the first notification.

In an optional embodiment, the controller is configured to determine the orientation of the authorization carrier within the authorization carrier reading zone. Optionally, if the determined orientation of the authorization carrier is such that the reader is unable to read the authorization carrier, the controller is further configured to generate a third notification to be output by the output unit, the third notification notifying the person to change the orientation of the authorization carrier.

In this way, the access control device provides guidance for correctly orientating the authorization carrier. The third notification may be helpful for authorization carriers that require a certain orientation, for example a visible barcode or QR code to be read out by the authorization carrier reader and/or on the orientation of a debit card or credit card to be inserted into a debit card/credit card reader. This may also apply for cases in which an RFID-card or a mobile phone with NFC antenna is placed inside the authorization carrier reading zone but is not correctly orientated.

The third notification may be issued after the first notification or without the first notification being issued. For example, the first notification is issued when the person does not find the authorization carrier reader so that the first notification provides guidance to move the authorization carrier to the authorization carrier reading zone. If so, the person may move the authorization carrier within the authorization carrier reading zone but may have the wrong orientation so that the authorization carrier reader is unable to read the authorization carrier although the authorization carrier is within the authorization carrier reading zone. In this case, the third notification notifies or informs the user to change the orientation authorization carrier, for example to turn the authorization upside down. Analogously to the first notification, the third notification may include a prestored or bespoke message (e.g. the orientation of the authorization carrier is determined and the best or quickest way to re-orient the authorization carrier is included in the third notification). Further, the third notification may only be issued after a predetermined period of time over which the authorization carrier is determined to be within the authorization carrier reading zone.

The third notification may be issued if the person has been identified and has placed the authorization carrier within the authorization carrier reading zone. In this case, no first notification has been issued. The controller may be configured to detect the presence of the authorization carrier in the authorization carrier reading zone by the analysis of the recorded video image. Further, the presence of the authorization carrier within the authorization carrier reading zone may be determined in that the authorization carrier reader detects that there is an authorization carrier within the authorization carrier reading zone and is unable to read out the authorization carrier.

The person may show or present the authorization carrier in the wrong orientation so that the authorization carrier reader is unable to read the authorization carrier. In this case, the third notification may be issued (e.g. depending on whether the authorization carrier has been placed within the orientation carrier reading zone longer than a predetermined period of time indicating that the person does not realise that the orientation carrier is held in the wrong orientation).

In an optional embodiment, the authorization carrier reader includes a first reader configured to read a first type of the authorization carrier and a second reader configured to read a second type of the authorization carrier. Optionally, the controller is configured to determine that the authorization carrier is of the first type or the second type. Further optionally, if the authorization carrier is determined to be of the first type, the first notification includes guidance to the person to move the authorization carrier of the first type to the authorization carrier reading zone of the first reader, and if the authorization carrier is determined to be of the second type, the first notification includes guidance to the person to move the authorization carrier of the second type to the authorization carrier reading zone of the second reader.

In this embodiment, the access control device includes the two different embodiments of the reader. Exemplary embodiments have been described above. The authorization carrier reading zones of the first and second reader may not overlap or only partially overlap. Thus, the access control device is configured to read two different types of authorization carriers. Exemplary types of authorization carriers have been described above.

In this way, the first notification may be considered as a notification for providing guidance to the person for moving the authorization carrier to the respective reader. This may be helpful for instances where the person presents the authorization carrier with the wrong reader, for example the authorization carrier of the first type with the second reader (or vice versa). The second reader may be unable to read the first type of authorization carrier and/or the first reader may be unable to read the second type of authorization carrier.

In an optional embodiment, the output unit includes a speaker. Optionally, the speaker is configured to output the first notification, the second notification, and/or the third notification as an audio message, optional a verbal message.

In this way, the person can hear the first, second, and/or third notifications. This may accelerate the understanding of the notifications compared to a visual notification because the person does not need to find the location of a visual notification. For example, if the person does not find the authorization carrier reader, they may also not instantly find or recognise a visual notification. Further, an audio message may be faster processed by the person compared to a visual notification which may require some time for reading, understanding, and transferring the notification inappropriate behaviour.

The controller may be configured to generate the first to third notifications by arranging prestored audio recordings of words, combination of words, and/or sentences. Alternatively or additionally, the controller may be configured to generate sentences and convert them into the audio message. The verbal message may be a message that can be heard by the person and conveys information by using words. The verbal message may mimic or imitate an instructor or staff standing next to the access gate for helping persons through the access control device.

In an optional embodiment, the controller is configured to select a language of the verbal message based on information stored on the authorization carrier.

The controller may be configured to generate the verbal message of the first to third notifications in various languages. This may help to provide guidance to the persons who speak different languages. The authorization carrier may include or store information on the language the person having the authorization carrier speaks. This information may be read out by the authorization carrier reader and forwarded to the controller to appropriately select the language. This may be helpful for use-cases in which the authorization carrier is already read. Thus, the process of guiding the carrier to the appropriate authorization carrier reader is already finished. This can be used to send further messages (e.g. regards) to the person.

Alternatively, the verbal message is output in a default language which may correspond to the official language in which the access control device is placed. In this case, the person may select a different language with the access control device, e.g. using an interface arranged on the access control device.

In an optional embodiment, the access control device further comprises a microphone configured to detect a voice of the person. Optionally, the controller is configured to analyse the detected voice of the person for extracting the content thereof. Further optionally, the controller is further configured to generate a message in response to the extracted content of the detected voice. In an optional embodiment, the controller includes an artificial intelligence for generating the message.

The microphone may be arranged in or on the housing of the access control device. More generally, the microphone may be arranged in such a position that it is possible to record a voice of the person standing next to the access control device, optionally the authorization carrier reader, and/or in the access area. The microphone may be in data communication with the controller.

The controller may include a program, algorithm, neural network, and/or artificial intelligence to analyse the detected voice for determining its content. In other words, the controller may be configured to understand what the person is saying. Furthermore, the controller may be configured to generate a response to what the person is saying. Here again, a neural network or artificial intelligence may be used. The access control device may provide functionality similar to a chat robot so that the person can verbally interact with the access control device. Chat robot functionalities are known for the skilled person and can be implemented with the access control device.

These chat robot functionalities may be used by the person if there are any questions and/or the first to third notifications are not sufficient for the person to present the authorization carrier within the authorization carrier reading zone.

In an optional embodiment, wherein the controller is configured to determine the language of detected voice and generate the message in the language of the extracted voice.

With this embodiment, the controller may first start with determining the language of the voice recorded by the microphone and then analyses the recorded voice with regard to its content. The controller may be configured to select the language of the verbal message based on the language the person interacting with the access control device speaks.

In an optional embodiment, the access control device further comprises a display for displaying the first notification, the second notification, and/or the third notification as a written message and/or an animated visualization.

The display may be arranged on the access control device, for example on the housing of the access control device. The display may be in data communication with the controller. One or more cameras of the imaging unit may be arranged behind the display and/or next to the display.

The controller may be configured to generate a text that is displayed on the display. The text may be an example of a written message of the first notification, the second notification, and/or the third notification. The text may be a prestored text or is generated on-the-fly depending on the current position and/or orientation of the authorization carrier.

The animated visualisation may be used to convey the content of the first notification, the second notification, and/or the third notification to the user. For example, the animated visualisation starts with showing the current position and/or orientation of the authorization carrier and the position of the authorization carrier reader. Subsequently, a movement and/or reorientation of the authorization carrier is displayed and/or shown for visualising to the person how to move the authorization carrier towards the authorization carrier zone and/or to reorientate the authorization carrier such that it can be read by the authorization carrier reader. The animated visualisation may include an animated graphics.

Optionally, the first notification, the second notification, and/or the third notification may output by the speaker and the display. In other words, the first to third notifications may be issued such that the person can hear and see the respective notifications.

The display and the microphone may be controlled by the controller in such a way that they generate an avatar or robot with which the person can interact. The avatar may be a two-dimensional graphical representation or a three-dimensional model of an operator or staff helping the person to pass the access control device. The avatar may combine "real" verbal interaction with mimics on the display to provide an immersed experience.

In an optional embodiment, the speaker, the microphone, and/or the display are located on or in the housing of the access control. In this way, all the functionalities of the access control device can be provided close to the access blocking device. This may provide a single onsite comprehensive component.

Alternatively, the controller may be external to the housing of the access control device. For example, the controller may be provided by a central server which controls various access control devices.

In a further alternative embodiment, the microphone, the speaker, the controller, and/or the display may be arranged external to the housing of the access control device, for example on an external robot that can move between the various access control devices. In this way, the robot can service a plurality of access control devices similar to a human instructor or staff that helps facilitating the person to access the restricted area.

This disclosure may also refer to a ticket vending machine which comprises an authorization carrier reader, an imaging unit, an output unit, a controller, and a ticket generator. The authorization carrier reader is configured to read an authorization carrier if the authorization carrier is located in an authorization carrier reading zone. The imaging unit is configured to record a video image of a person in front of the access device. The output unit is configured to output a notification to the person in front of the access device. The controller is configured to (i) analyse the video image recorded by the imaging unit for identifying and localizing the authorization carrier held by the person, (ii) determine whether the identified authorization carrier is within the authorization carrier reading zone, (iii) generate, if the authorization carrier is determined not to be within the authorization carrier reading zone, a first notification to be output by the output unit, the first notification providing guidance to the person to move the authorization carrier to the authorization carrier zone, and (iv) instruct the ticket generator to generate the ticket after the authorization carrier being read by the authorization carrier reader.

The ticket vending machine may include the same optional features, characteristics, and embodiments as the access control device described above. The ticket generator may include a printer for printing the ticket and/or a transceiver for sending an electronic ticket to the person (e.g. directly via near-field communication and/or via the internet). The ticket vending machine may include an interface for selecting a ticket and/or confirming the purchase of the ticket.

This disclosure may also be summarised as outlined below.

For achieving a high throughput through an access control device, a visitor or person needs to place a ticket in the right way at a gate or ticket machine (examples of an access control device) on short notice (or with little time available). The person may lack experience to find the right position and orientation because this type of access control device is new to them. Thus, there is little time for exploring the correct way for the interaction with the access control device.

Even if the person has the correct ticket with them, they may not find the corresponding reader for their kind/type of ticket because eyes and brain of the person may be occupied with other things. In this case, additional situational information on a display may not be helpful. Even finding the display might be difficult when looking at different parts of the access control device. In addition to the ticket, the further interaction between the person and the access control device may differ between the various types of access control devices so that persons find it difficult to recognize what the next steps are as there are several options at the same time.

Further, signage may not be the most efficient way. For example, considering a signage on a door with "Push" or "Pull", it often takes a while until a person has read, understood, and transferred the information into a right reaction.

As commonly known, lots of stickers and/or other types of signs are provided on the front of or on a device to guide the visitor to the various options of interactions. This is static information not considering the actual situation. Such information by signalling is not well targeted. Further, reading the information/stickers requires time, which visitors usually do not want to spend and are therefore even more stressed.

This disclosure looks for an additional way when other means have failed (e.g. see example above or a person under stress is not receptive to the simplest or any form of help). An additional way to approach a stressed visitor is to use sound or voice. The persons under stress are usually open to receive additional information.

Up to now, "real" persons (staff of the company controlling access to the restricted area) are placed in front of a gate at a stadium or at ski resorts to pro-actively help visitors when they approach to such an interaction point for getting entry or buying a ticket.

In general, this disclosure relates to introducing a virtual person for helping persons accessing the restricted area, which may help to save operator's personal.

The virtual person of this disclosure may be an avatar, representing the operator as part of the device. Another approach of the invention could be additional robots to support visitors on the way towards the gate or while moving through an event or recreation location.

A common problem for additional hints is choosing the right approach. What should an avatar do if signalling is not an appropriate information channel?

The invention proposes in some embodiments a combination of sound (e.g. "real" speaking) and additional mimic on a display. But such an avatar needs to address the visitor with the appropriate language and habits. The invention also considers that a visitor might be annoyed if they are targeted with a message, they do not like (wrong wording, mimic that are not understood or perceived as inappropriate, and/or if the avatar appears frequently and/or too quickly).

The access control device (e.g. in the form of an avatar) may appropriately react on the current situation.

Thus tasks for the access control device (e.g. in the form of an avatar) could be:
Analysing the visitors/persons in front of the device and deciding if they need help.
If so
   ∘ Identifying the right language - for example by analysis of what the visitor/person says
   ∘ Possible options could be: "force"/motivate the visitor to offer his language: for example, saying "hello" in the most likely languages and listen to their answer
   ∘ Another option is to start with English as default language and switch to other recognized languages later - such as Spanish, German, etc
   ∘ Possible actions like language selection or stopping the access control device (e.g. in the form of an avatar) can be shown by pantomimic actions (show the possible language flags, non-verbal icons for selecting actions like paying cash or card, using a voucher, present a prepaid card etc.). Using wiping actions on a screen are very common and can be used for selecting. Support the vocal statements with showing a real but artificial face on the display to build an emotional bridge to the visitor, which helps to "reach" the visitor.
   ∘ Additionally or alternatively, using video analysis to try to get right nationality and thus choose the appropriate language.
Doing "type level" analysis per person to choose the right words - e.g.
   ∘ Connect to a well-dressed person with a "upper class" phrases
   ∘ Address e.g. younger "cool" persons w/ statements from his peers

The access control device (e.g. in the form of an avatar) may detect whether and what problem a visitor/person has, what type they are, what their preferences are, e.g. by using video analysis
This could be done permanently or be triggered if a person is remaining longer in front of a gate or ticket machine than a certain predefined time.
Receiving information about the visitors age, sex, attitude.
Receiving a status of the face expression and/or body language to identify stress moments to start the appropriate support by the avatar.
Even re-recognizing a visitor by face recognition, or other markers (iris scan) may be possible. Face recognition could result in a 128-byte string. The string cannot be "reengineered" into a face thus related information fulfils privacy regulations and the visitor cannot be directly targeted)

The access control device may be
Without a display
With a display and a "happy face" - to better connect to visitors
   ∘ Adapt the access control device (e.g. in the form of an avatar) to the visitor type: Show a woman for woman, a kid for a kid, etc.

The access control device may consider preferences from former conversations if the visitor was already communicating with the avatar and was re-recognized. This may include a user-analysis:
If the visitor has a smartphone in their hand and moves it longer in the area of the ticket reader, then the access control device may tell them where and how to place and orientate the phone (even depending on if a barcode is seen on the video analysis or the thicket might be an RFID / NFC ticket)
If the visitor has a letter in his/her hand, probably a print-at-home barcode ticket, access control device may direct them towards the barcode scanner.

Other options of directing the visitor are:
Analysing the kind/type of ticket in use and
notifying only the appropriate reader by appropriate illumination adding voice support if illumination is not sufficient enough, maybe after a certain period of time only

In front of an APM with many interfaces,
allow a conversation between visitor and avatar
ask visitor for their desire ... Al knows already a bit about the problem and could learn what to help on
E.g. use creative AI to generate a constructive conversation

Thus the access control device (e.g. in the form of an avatar)
may start conversation on a high level of situation awareness
may provide fast support, e.g. without asking thousands of questions to find the core problem
may provide the intelligence to start on this high level - enabling to identify the real problem
should be quite open for various problem solutions.

The access control device (e.g. in the form of an avatar) may ask the person to show the ticket (paper, mobile, RFID card) up to the camera for further investigation:
Perhaps the barcode is even read from the video-stream and thus analysed.
Also an NFC Reader behind the display could read a Smartphone NFC ticket or a RFID card
For example, a camera behind a display could serve as well as a barcode reader - as "avatar's face / eyes on the display look at the ticket" and motivates the visitor through this mimicry to point the screen of their mobile device towards the display.
Request to turn the ticket if it is displayed in the wrong orientation

Use preferences may be stored to let the access control device (e.g. in the form of an avatar) act accordingly on the display - even for entertainment. For example in case of traffic jams, people may be entertained while waiting in front of the gate or to give visitors additional information, e.g. on remaining waiting time.

The invention is explained in more detail below by way of example with reference to the accompanying figures. Therein,
- **Fig. 1**: shows a schematic representation of a first embodiment of an access control device;
- **Fig. 2**: shows a schematic representation of a second embodiment of an access control device

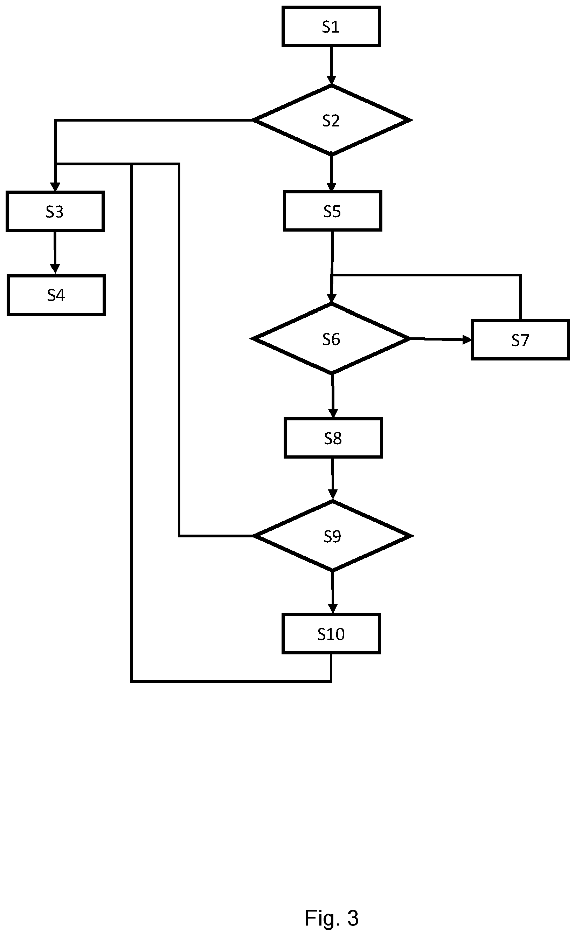

- **Fig. 3**: shows block diagram illustrating a method for validating access to a restricted area that may be executed by the access control device of Fig. 1 or Fig. 2.

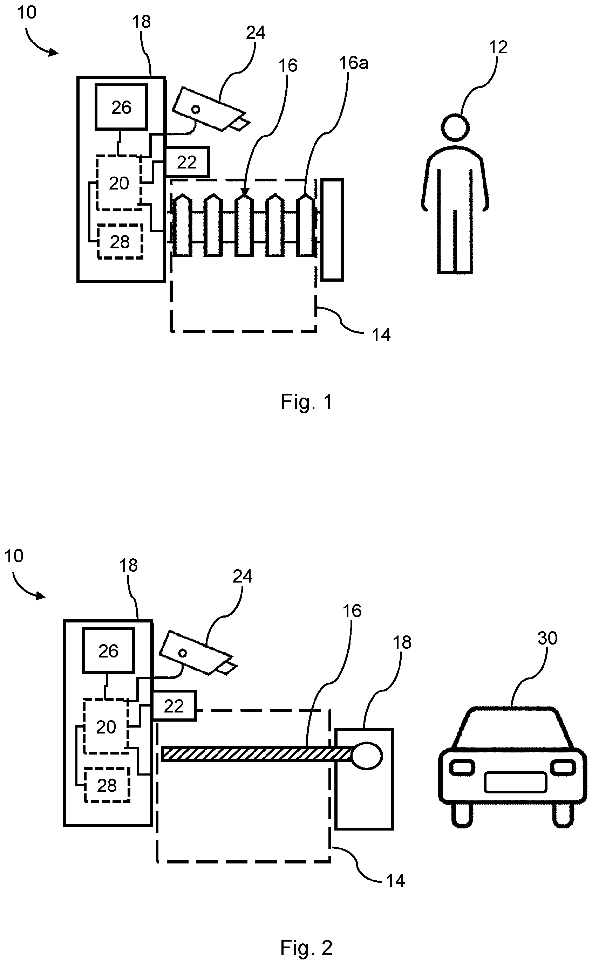

Fig. 1 shows an access control device 10 for controlling and/or validating access to a restricted area. The access control device 10 of Fig. 1 controls access of a person 12 to the restricted area. The person 12 needs to pass an access area 14 which is at least partially delimited by the access control device 10. The access control device 10 further includes an access blocking device 16 which, in a closed position (as shown in Fig. 1), blocks the access area 14 so that the person 12 cannot pass the access control device 10. In an open position of the access blocking device 16 (not shown in the figures), the access blocking device 16 unblocks access area 14 so that the person 12 can pass through the access control device 10.

The access blocking device 16 may include a blocking element 16a (such as a turnstile or a movable gate (as shown in Fig. 1)) and a supporting device (not shown in Fig. 1) on which the blocking element is movable mounted. The blocking element 16a is movably mounted to the supporting device which is located in a housing 18 of the access blocking device 16. The housing 18 and/or the supporting device includes an actuator (not shown in figures) for moving the blocking element 16a between the open position and the closed position. The actuator is controlled by a controller 20 which is arranged within the housing 18.

The access control device 10 may further include an authorization carrier reader 22, an imaging unit 24, an output unit 26, and/or a microphone 28 which may be all in data communication with the controller 20 (e.g. by a wired or wireless connection).

The 22 reader may include a first reader, such as optical scanner for scanning a barcode or QR code, and a second reader for reading a RFID signals. Thus, the authorization carrier reader 22 may be configured to read two different types of authorization carriers, e.g. a ticket including an optically visible barcode or QR code and an electronic ticket that can be read using RFID communication.

The authorization carrier reader 22 can read the authorization carrier if the authorization carrier is arranged or positioned within an authorization carrier reading zone. The authorization carrier reading zone may be determined by the optical components of the scanner and/or the range of the RFID communication provided by the authorization carrier reader 22. Thus, for reading the authorization carrier, the person 12 needs to position the authorization carrier within the authorization carrier reading zone.

The imaging unit 24 may include a video camera for recording video images of the access area 14 and/or an area close to the authorization carrier reader 22. The imaging unit 24 may be configured to image the person 12 if the person 12 is standing close to the authorization carrier reader 22.

The output unit 26 may include a display and/or a speaker. The display is configured to display text messages and/or animated graphics to the person 12 standing in front of the authorization carrier reader 22. The speaker may be configured to output audio or verbal messages that can be understood by the person 12 standing in front of the authorization carrier reader 22.

The microphone 28 may be configured to detect the voice of the person 12 if the person 12 stands close to or in front of the authorization carries reader 22. The microphone 28, the controller 20, and the speaker of the output unit 26 may be arranged within the housing 18. The display of the output unit 26, the authorization carrier reader 22, and the imaging unit 24 may be arranged on the housing 18.

The embodiment of the access control device 10 of Fig. 2 as the same features, characteristics, and optional embodiments as the access control device 10 of Fig. 1, except for the following differences:
The access control device 10 of Fig. 2 includes a barrier as the blocking element 16a for controlling access of a vehicle 30 to the restricted area. The person 12 may sit in the vehicle 30 when interacting with the access control device 10, for example for presenting the authorization carrier to the authorization carrier reader 22.

A method for validating and/or controlling access to the restricted area is described in the following. The method may be executed by the access control devices 10 of Fig. 1 or Fig. 2, optionally by the controller 20.

In step S1, a video image of an area in front of the authorization carrier reader 22 is recorded and analysed for identifying the presence of the person 12 in front of or close to the authorization carrier reader 22.

In step S2, it is determined whether the person 12 stands in front of the authorization carrier 22 for a predetermined period of time without the authorization carrier being read by the authorization carrier reader 22.

If the authorization carrier is read out by the authorization carrier reader 22 within the predetermined period of time, the method proceeds with step S3 in which the authorization carrier is validated. This may include checking whether the authorization carrier grants access to the restricted area (e.g. is valid or not). Further, the validation of the authorization carrier may include recording that the person 12 has accessed the restricted area so that the authorization carrier is no longer valid.

After step S3, the method proceeds with step S4 in which an opening signal is generated and forwarded to the access blocking device 16 so that the access blocking device 16 is moved from the closed position to the open position.

If it is found in step S2 that the authorization carrier is not read out by the authorization carrier reader 22 within the predetermined period of time, the method proceeds with step S5 in which the method determines the language of interaction with the person 12. In a first option, this includes using a default language which may be English or the official language in which the access control device 10 is located. Alternatively, step S5 includes analysing a voice of the person 12 for extracting the language the person 12 uses. If the person 12 does not communicate with the access control device 10 or another person, a prompt may be issued by the speaker to start a verbal interaction with the access control device 10. This prompt may be a generic word such as "hello" or "hi" which prompts to person 12 to respond by saying something in their language. Based on a response, the language for the further interaction between access control device 10 and the person 12 is set.

It is to be noted that the step S5 may be executed at various points of the method described herein and does not necessarily need to be executed after step S2.

In the following step S6, the recorded video image is analysed for identifying the authorization carrier.

If no authorization carrier is identified in step S6, the method proceeds with step S7 in which a second notification is issued by the output unit 26, for example in form of a verbal message output by the speaker or text message displayed by the display. The second notification notifies the person 12 to present or show the authorization carrier so that it can be imaged by the imaging unit 24. The method then returns to step S6.

If an authorization carrier is identified in step S6, the method proceeds with step S8 in which a first notification is output by the output unit 26 for example in form of a verbal message output by the speaker or text message displayed by the display. The first notification provides guidance to the person 12 to move the authorization carrier to the authorization carrier reading zone so that the authorization carrier reader 22 can read the authorization carrier.

Step S8 may include determining the current position of the authorization carrier. In this case, the first notification provides guidance for moving the authorization carrier from the detected current position to the authorization carrier reading zone. This may include an audio or visual message for indicating to the person 12 to move the authorization carrier up, down, to the left or to the right. The first notification may also include animated graphics indicating the current position of the authorization carrier and where to move the authorization carrier so that it is within the authorization carrier reading zone.

Further, step S8 may include determining the type of ticket and the first notification includes guidance to move the authorization carrier to the first ticket reader or the second ticket reader depending on the type of the ticket. For example, if the authorization carrier includes a barcode, the first notification includes guidance to move the authorization carrier towards the bar code reader of the authorization carrier reader 22.

Alternatively, step S8 may include issuing a prestored first notification that provides guidance where to find the authorization carrier reading zone.

In step S9 following step S8, the orientation of the authorization carrier in the authorization reading zone is determined in the recorded video image. If the orientation of the authorization carrier is correct, the authorization carrier reader 22 can read the authorization carrier when the authorization carrier is positioned within the authorization carrier reading zone. In this case, the method proceeds with step S3 as described above.

If it is determined in step S9 that the orientation of the authorization carrier is incorrect so that authorization carrier reader 22 is unable to read the authorization carrier, the method proceeds with step S10 which includes outputting a third notification by the output unit 26, for example in form of a verbal message output by the speaker or text message displayed by the display. The third notification notifies the person 12 to change the orientation of the authorization carrier, for example notifying the person 12 to turn the authorization carrier upside down. If the person 12 followed the third notification, the authorization carrier reader 22 can read the authorization carrier so that the method proceeds with step S3 as described above.

The method may further include that detecting a voice of the person 12 by the microphone 28,extracting its content, and generating a response to the content of the extracted message. In this way, a chat functionality between the person 12 and the access control device 10 may be provided which may provide an additional means for helping the person 12 to correctly present the access carrier within the access carrier reading zone.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. An access control device for validating access to a restricted area, comprising
an authorization carrier reader (22) configured to read an authorization carrier if the authorization carrier is located in an authorization carrier reading zone,
an imaging unit (24) configured to record a video image of a person (12) in front of the access device,
an output unit (26) configured to output a notification to the person (12) in front of the access device, and
a controller (20) configured to
analyse the video image recorded by the imaging unit (24) for identifying and localizing the authorization carrier held by the person (12),
determine whether the identified authorization carrier is within the authorization carrier reading zone,
generate, if the authorization carrier is determined not to be within the authorization carrier reading zone, a first notification to be output by the output unit (26), the first notification providing guidance to the person (12) to move the authorization carrier to the authorization carrier reading zone, and
validate the authorization carrier after the authorization carrier being read by the authorization carrier reader (22).

2. The access control device of claim 1, wherein the controller (20) is further configured to determine a current position of the authorization carrier,
wherein the first notification provides guidance to the person (12) to move the authorization carrier from the current position to the authorization carrier zone.

3. The access control device of claim 1 or 2, further comprising an access blocking device (16),
wherein the controller (20) is configured to send an opening signal to the access blocking device (16) after the authorization carrier being read by the authorization carrier reader (22).

4. The access control device of any preceding, wherein the controller (20) is configured to identify the person (12) in front of the authorization carrier reader (22) and measure the time period during which the person (12) is in front of the authorization carrier reader (22),
wherein the controller (20) is configured to generate the first notification if the measured time period is longer than a predetermined time period.

5. The access control device of any preceding claim, wherein, if the controller (20) is unable to identify and/or localize the authorization carrier held by the person (12), the controller (20) is further configured to generate a second notification to be output by the output unit (26), the second notification notifying the person (12) to show the authorization carrier.

6. The access control device of any preceding, wherein the controller (20) is configured to determine the orientation of the authorization carrier within the authorization carrier reading zone, and
wherein, if the determined orientation of the authorization carrier is such that the reader is unable to read the authorization carrier, the controller (20) is further configured to generate a third notification to be output by the output unit (26), the third notification notifying the person (12) to change the orientation of the authorization carrier.

7. The access control device of any preceding, wherein the authorization carrier reader (22) includes a first reader configured to read a first type of the authorization carrier and a second reader configured to read a second type of the authorization carrier,
wherein the controller (20) is configured to determine that the authorization carrier is of the first type or the second type, and
wherein, if the authorization carrier is determined to be of the first type, the first notification includes guidance to the person (12) to move the authorization carrier of the first type to the authorization carrier reading zone of the first reader, and
wherein, if the authorization carrier is determined to be of the second type, the first notification includes guidance to the person (12) to move the authorization carrier of the second type to the authorization carrier reading zone of the second reader.

8. The access control device of any preceding, wherein the output unit (26) includes a speaker,
wherein the speaker is configured to output the first notification, the second notification, and/or the third notification as a verbal message.

9. The access control device of claim 8, wherein the controller (20) is configured to select a language of the verbal message based on information stored on the authorization carrier.

10. The access control device of any preceding, further comprising a microphone (28) configured to detect a voice of the person (12),
wherein the controller (20) is configured to analyse the detected voice of the person (12) for extracting the content thereof, and
wherein the controller (20) is further configured to generate a message in response to the extracted content of the detected voice.

11. The access control device of claim 10, wherein the controller (20) includes an artificial intelligence for generating the message.

12. The access control device of claim 10 or 11, wherein the controller (20) is configured to determine the language of detected voice and generate the message in the language of the extracted voice.

13. The access control device of any preceding, further comprising a display for displaying the first notification, the second notification, and/or the third notification as a written message and/or an animated visualization.

14. The access control device of any one of the claims 8 to 13 when depending on claim 3, wherein the controller (20), the speaker, the microphone (28), and/or the display are located on or in a housing (18) of the access control device (10).

15. A method for validating access to a restricted area, comprising the steps of
recording a video image of a person (12) in front of the access device,
analysing the recorded video image for identifying and localizing an authorization carrier held by the person (12),
determining whether the identified authorization carrier is within the authorization carrier reading zone of an authorization carrier reader (22),
generating, if the authorization carrier is determined not to be within the authorization carrier reading zone, a first notification to be output by an output unit (26), the first notification providing guidance to the person (12) to move the authorization carrier to the authorization carrier zone, and
validating the authorization carrier after the authorization carrier being read by the authorization carrier reader (22).
